# EUROPEAN PATENT SPECIFICATION

(11) **EP 0 331 753 B1**
(45) Date of publication and mention of the grant of the patent: **13.04.1994**
(21) Application number: 88907796.2
(22) Date of filing: 31.08.1988
(51) Int. Cl.: C08G 77/20, C08G 77/06

(54) **PROCESS FOR PRODUCING ORGANOPOLYSILOXANES HAVING ALKENYL GROUP AT ITS END**
VERFAHREN ZUR HERSTELLUNG VON ORGANOPOLYSILOXANEN MIT EINER ALKENYL-ENDGRUPPE
PROCEDE DE PRODUCTION D'ORGANOPOLYSILOXANES COMPORTANT UN GROUPE ALKENYLE A SON EXTREMITE

(30) Priority: 31.08.1987 JP 217293/87; 28.04.1988 JP 107345/88
(43) Date of publication of application: 13.09.1989
(73) Proprietor: TORAY SILICONE CO. LTD., Chuo-ku Tokyo 103 (JP)
(72) Inventor: OKAWA, Tadashi, Ichihara-shi Chiba 299-01 (JP); SUZUKI, Toshio, Kimitsu-gun Chiba 299-02 (JP)
(74) Representative: Laredo, Jack Joseph
(86) International application number: PCT/JP88/00866
(87) International publication number: WO 89/01954

(56) References cited:
- GB-A- 945 810
- JP-A- 62 533
- JP-A- 5 298 798
- JP-A- 5 978 236
- JP-A-50 133 299
- JP-B- 4 015 988
- JP-B- 5 721 743
- US-A- 4 683 277

## Description

### Technical Field

The present invention relates to a process for preparing an alkenyl-terminated organopolysiloxane. Particularly, the present invention relates to a process for preparing an organopolysiloxane having an alkenyl group at at least one terminal and an optional group at the other terminal according to non-equilibrating polymerization.

### Background Art

The ring opening polymerization of a cyclic trisiloxane in the presence of an alkali metal catalyst is a well-known technique which has heretofore been practiced in the art. It also is known that the non-equilibrating polymerization of a cyclic trisiloxane can be effected in the presence of a lithium catalyst according to "living polymerization." For example, Macromolecules, Vol. 3, No. 1, P. 1 (1970) includes a description by J. Saam et al. to the effect that ring opening polymerization of hexamethylcyclotrisiloxane in the presence of butyllithium is followed by termination of the polymerization by addition of vinylchlorosilane to obtain an organopolysiloxane having a vinyl group at one terminal. Japanese Patent Laid-Open No. 78,236/1984 also discloses a process for preparing an organopolysiloxane according to an analogous procedure. A method of introduction of a functional group with a polymerization terminator having the functional group according to such a procedure as mentioned above is usually called a "termination method."

Since a reaction to block a terminal according to such a conventional technique is carried out after formation of a high molecular weight product, however, the conventional technique is defective in that the completion of the above-mentioned reaction by which the introduction of a functional group is effected is not guaranteed. The conventional technique is further defective in that no more than a mono-functional organopolysiloxane can be obtained because no functional group is introduced into a molecular chain terminal at the time of polymerization initiation (i.e., a molecular head).

The authors of the present invention have made intensive investigations with a view to obviating the above-mentioned defects of the termination method, and, as a result, have completed the present invention. Accordingly, an object of the present invention is to provide a process for preparing an organopolysiloxane which ensures the introduction of an alkenyl group at least into a molecular chain terminal at the time of polymerization initiation (i.e., a molecular head) according to non-equilibrating polymerization.

### Disclosure of Invention

The above-mentioned object of the present invention has been accomplished by providing a process for preparing an alkenyl-terminated organopolysiloxane in which a cyclic trisiloxane is polymerized, in the presence or absence of a molecular weight modifier, and the reaction is thereafter terminated, characterised in that an alkenyl-terminated organopolysiloxane represented by the formula: 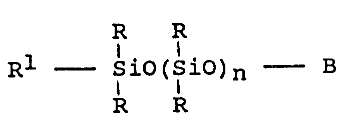
where R¹ is an alkenyl group, the R groups, which may be the same or different, are a monovalent hydrocarbon group or a monovalent halogenated hydrocarbon group, B is hydrogen or a group derived from a terminating agent selected from inorganic acids, organic acids and organochlorosilanes, and n is represented by the formula:

$\text{n ≧ m + 3,}$

where m is an integer of 0, 1 or more, is obtained by polymerizing acyclic trisiloxane represented by the formula: 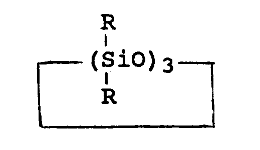
where R is as defined above,
with the aid of a polymerization initiator consisting of one or more alkali metal salts of one or more organosilanes or organopolysiloxanes, represented by the formula: 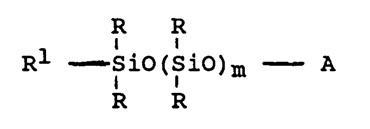
where A is an alkali metal, and R¹, R and m are as defined above,
in the presence or absence of a molecular weight modifier consisting of one or more organosilanes or organopolysiloxanes, represented by the formula: 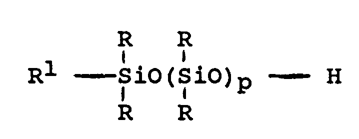
where p, which may be the same as or different from m, is an integer of 0, 1 or more, and R¹, R are as defined above,
the molar ratio of said polymerization initiator to said molecular weight modifier being 100:0 to 0.1:100, and the polymerization reaction being carried out in a dry aprotic solvent under anhydrous conditions with predried reactants at a temperature of 0 to 30°C for a reaction time of 1-50 hours.

A detailed description will now be made. The alkali metal salts of organosilanes or organopoly siloxanes which are used as the polymerization initiator are characterized by having an alkenyl group bonded to a silicon atom at a molecular chain terminal and an alkali metal substituted for the hydrogen atom of a hydroxyl group bonded to a silicon atom at the other molecular chain terminal (the same silicon atom in the case of an organosilane). Known methods of preparing an alkali metal salt of organosilane or organopolysiloxane include, for example, a method wherein an alkenyl group-containing monochloro-silane or -polysiloxane corresponding to the above-mentioned salt is carefully hydrolyzed with a dilute aqueous basic solution to prepare an organosilane or organopolysiloxane having not only the alkenyl group but also a silanol group, which is then reacted with an alkali metal compound. Lithium, sodium, and potassium can be mentioned as the alkali metal represented by A. Lithium is most preferred just as in non-equilibrating polymerization for preparation of common organopolysiloxanes. While conversion of silanol groups into the lithium salt thereof is generally effected by a reaction thereof with an alkyllithium, the use of n-butyllithium is most preferred in the present invention.

A feature of the present invention is that alkenyl groups remain stable throughout the process for preparing an alkenyl-terminated organopolysiloxane according to the present invention by virtue of the use of an organosilane or organopolysiloxane having a specific structure as a starting material of the polymerization initiator, though common ethylenic double bonds tend to be involved in polymerization in the presence of an alkaline catalyst.

The number of carbon atoms in the alkenyl group R¹ is preferably in the range of 2 to 10, more preferably in the range of 2 to 6, from the viewpoint of the easiness of purification of the starting material as well as the availability thereof. Examples of the alkenyl group include a vinyl group, an allyl group, butenyl groups, hexenyl groups, and decenyl groups. Although the position of a double bond in the alkenyl group is not restrictive, the double bond is preferably located at the terminal of the alkenyl group from the viewpoint of the reactivity of the resulting polymer. The substituents R which may be the same as or different from one another are each defined as a monovalent hydrocarbon or halogenated hydrocarbon group, but all or most of them are preferably methyl groups from the viewpoint of the easiness of preparation. Examples of the substituents other than a methyl group include alkyl groups such as an ethyl group, propyl groups, butyl groups, pentyl groups, and hexyl groups; aryl groups such as a phenyl group, a tolyl group, and xylyl groups; aralkyl groups sucy as a benzyl group and a phenethyl group; and halogenated alkyl groups such as a chloromethyl group, chloropropyl groups, and trifluoropropyl groups. If alkenyl groups are desired to be introduced into the molecular chain, R may be an alkenyl group.

Although m is defined as an integer of 0, 1 or more, an organosilane as the precursor of the alkali metal salt with a value m of 0 is so poor in stability that the hydroxyl group thereof may unfavorably be readily involved in dehydrocondensation thereof. In contrast, an organopolysiloxane with a silanol group as the precursor is stable against dehydration and easy of preparation thereof. From this point of view, organopolysiloxanes wherein m is 3 to 20 are preferable.

Next, cyclic trisiloxanes usable in the present invention are known as monomers for non-equilibrating polymerization. Just as described above, the substituents R bonded to silicon may be the same as or different from each other and are each defined as a monovalent hydrocarbon group or a monovalent halogenated hydrocarbon group, examples of which include the same groups as mentioned above, and which may be an alkenyl group if alkenyl groups are desired to be introduced into the molecular chain. Methyl or phenyl groups are advantageous as the substituents R bonded to silicon in the cyclic trisiloxane from the viewpoint of the availability thereof.

The conditions of the polymerization reaction are varied depending on a monomer to be used. For example, in the case of polymerization of hexamethylcyclotrisiloxane, the reaction thereof is preferably carried out in a solvent at a temperature of 0 to 30 °C for 1 to 50 hours. Any solvent can be used in so far as it is aprotic and can well dissolve the starting material and the resulting polymer. Recommendable examples of the solvent include aromatic solvents such as benzene, toluene, and xylenes; aliphatic solvents such as hexanes and heptanes; ethers such as tetrahydrofuran and diethyl ether; ketones such as acetone and methyl ethyl ketone; esters such as ethyl acetate and butyl acetates; and other solvents such as dimethylformamide, dimethyl sulfoxide, and hexamethylphosphoric triamide. The combined use of two or more kinds of solvents often provides good results, For example, where a low-polarity solvent such as toluene is used, it is recommendable to add thereto a high-polarity solvent such as dimethylformamide, dimethyl sulfoxide or hexamethylphosphoric triamide in order to promote the reaction.

Among the polymerization conditions, the reaction temperature and time are required to be controlled with sufficient care to ensure that no redistribution reaction occurs. Particularly in the case of preparation of an organopolysiloxane having an alkenyl group only at one terminal, such sufficient care is indispensable because the retention of the alkenyl group only at one terminal becomes impossible if the polymerization reaction comes to proceed as an equilibrating reaction based on redistribution, not in the manner of non-equilibrating polymerization. In other words, if such an equilibrating reaction occurs, a polymer having alkenyl groups at both terminals and a polymer having no alkenyl groups at both terminals are formed as by-products.

The polymerization reaction is preferably terminated by neutralization when the rate of reaction reaches a given value, which is usually confirmed by keeping track of the decreasing amount of the starting monomer according to gas chromatography or the like. Although the degree or extent of reaction at which the reaction should be terminated is quite different depending on the kinds of starting monomer and desired polymer, it is usually 70 to 100 %, preferably 80 to 95 %.

Prior to the reaction, it is necessary to remove water in the solvent and the starting monomer as much as possible. This is so because the presence of water may lower the molecular weight of the resulting organopolysiloxane and lead to a failure to prepare the desired alkenyl-terminated organopolysiloxane. Recommendable methods of drying the solvent and the monomer include distillation, heating, blowing of a dry gas into the system, adsorption onto active alumina, silica gel or zeolite, and dehydration with an alkali metal or a compound thereof.

In the process of the present invention, the molecular weight of the resulting organopolysiloxane is determined by the ratio of the polymerization initiator to the cyclic trisiloxane consumed. Since silanol groups undergo an exchange reaction with an alkali metal silanolate at a very high speed, an organosilane or organopolysiloxane containing a silanol group, which is a starting material of an alkali metal silanolate as the polymerization initiator, may be added as the molecular weight modifier.

As for the addition of the molecular weight modifier, it will suffice to use a mixture of a polymerization initiator and an organosilane or organopolysiloxane having an unreacted silanol group, which mixture can be prepared in the preparation of the polymerization initiator through a reaction with the molar amount of an alkali metal compound being smaller than the molar amount of silanol groups. Alternatively, fresh addition may be made of an organosilane or organopolysiloxane having an alkenyl group at one terminal and a silanol group at the other terminal, which is independent of the starting material of the polymerization initiator. Therefore, the polymerization degree p of the molecular weight modifier is an integer of 0, 1 or more which may be the same as or different from m, and is preferably the same as m in the range of 3 to 20, which, however, is not restrictive.

The alkali metal silanolate is used in an amount enough to bring about the ring opening reaction. The above-mentioned amount will suffice if the molar ratio of the polymerization initiator (with an alkali metal) to the molecular weight modifier (with silanol) is in the range of 100:0 to 0.1:100. When the above-mentioned ratio is in the range of 0.5:99.5 to 50:50, a favorable polymerization rate can be secured to the advantage of production efficiency and the amount of the expensive catalyst can be cut down.

Any neutralizing agent can be used to effect termination of the reaction in so far as it can react with the alkali metal silanolate to form a stable alkali metal salt. Examples of the neutralizing agent include mineral acids such as an hydrous carbon dioxide gas, hydrochloric acid, and sulfuric acid; carboxylic acids such as acetic acid, propionic acid, and acrylic acid; and chlorosilanes such as trimethylchlorosilane, dimethylchlorosilane, dimethylphenylchlorosilane, and dimethylvinylchlorosilane. When the termination is effected with an hydrous carbon dioxide gas, a mineral acid or a carboxylic acid, the terminal group of the resulting polymer is a silanol group. On the other hand, when the termination is effected with a chlorosilane, the terminal-blocking group is a silyl group remaining when chlorine is removed from the chlorosilane. Accordingly, when a silanol group is desired to be introduced into the molecular chain terminal of an organopolysiloxane, to be prepared, on the side opposite to that of the terminal having an alkenyl group, it is preferable to effect the termination with an acid. On the other hand, when a functional group bonded to a silicon atom is desired to be introduced, it is preferable to effect the termination with a chlorosilane having the above-mentioned functional group. Also, one(s) of various chlorosilanes may be further added to a silanol-terminated organopolysiloxane prepared through termination with an acid to introduce thereinto the corresponding one(s) of various functional groups through a dehydrochlorination reaction, in which it is recommendable to use a hydrochloric acid trapping agent such as an amine. Alternatively, a silanol-terminated organopolysiloxane may be reacted with a silazane, an aminosilane, a silyl amide, or an alkoxysilane to introduce thereinto one of various functional groups.

The organopolysiloxane thus obtained has a value n of at least 3, and contains an alkenyl group at one terminal and a hydrogen atom or a silyl group with an alkyl group, an aryl group, an alkenyl group, an alkynyl group or a hydrogen atom bonded thereto as the group B at the other terminal.

An alkenyl-terminated organopolysiloxane prepared according to the present invention can be used to prepare a graft copolymer thereof with other organopolysiloxane such as methylhydrogenpolysiloxane with both terminals blocked by trimethylsiloxy groups according to a reaction thereof in the presence of a platinum catalyst. Further, the reactivity of alkenyl groups can be utilized to easily prepare a copolymer with a polymer other than organopolysiloxanes.

### [Best Modes for Carrying Out the Invention]

The following Examples will now illustrate the present invention in detail. In the Examples, Me stands for a methyl group, Vi for a vinyl group, and Hex for Vi(CH₂)₄-. Characteristics are expressed in terms of values found when measured at 25°C unless otherwise specified. Additionally stated, solvents and reagents were used after dehydrated to such an extent as to provide a negligible water content.

### Example 1

200 g of water, 200 g of ice, 80 g of diethyl ether, and 13 g of sodium hydrogencarbonate were placed in a four-necked flask equipped with a stirrer, and well stirred while dropwise adding thereto a mixture composed of 40 g of Me₂ViSi(OSiMe₂)₃Cl and 35 g of diethyl ether. The ether layer was separated, dried over anhydrous sodium sulfate added thereto, and then distilled to distil off the ether to obtain Me₂ViSi(OSiMe₂)₃OH, which will be referred to as "OH-1."

4.97 g of OH-1, 40 ml of tetrahydrofuran, and 10 ml of a 1.53 N solution of n-butyllithium in hexane were placed and mixed together in a four-necked flask equipped with a stirrer to prepare a solution of a lithium salt of OH-1, Me₂ViSi(OSiMe₂)₃OLi, which will be referred to as "OLI-1" (0.31 mol/l). 0.60 ml (0.186 mmol) of OLI-1, 6.43 g (19.8 mmol) of OH-1, 75 g of hexamethylcyclotrisiloxane, 75 g of toluene, and 1.5 g of diemthyl sulfoxide were placed in a four-necked flask equipped with a stirrer, and subjected to a reaction under an atmosphere of nitrogen at room temperature for 5 hours. Since the extent of the reaction was 80 % as determined by gas chromatography, the reaction mixture was neutralized with dry ice. After filtration, the filtrate was distilled under reduced pressure to remove therefrom the solvent and the unreacted starting material. The resulting polymer will be referred to as "VP-1." The quantitative determination of vinyl groups in VP-1 according to gel permeation chromatography (GPC), Fourier transform nuclear magnetic resonance analysis (FTNMR) and iodometry confirmed that VP-1 was an organopolysiloxane represented by the following average formula:

Me₂ViSiO-(Me₂SiO)₄₅-SiMe₂OH.

The dispersion degree (M_{w}/Mₙ) of molecular weight distribution of the polymer was 1.19 as measured by GPC.

### Example 2

6.1 ml (5 mmol) of OLI-1 prepared in Example 1, 41.6 of hexamethylcyclotrisiloxane, and 41.6 g of tetrahydrofuran were placed in a four-necked flask equipped with a stirrer, and subjected to a reaction under an atmosphere of argon at room temperature for 3.5 hours. Since the extent of reaction was 89 % as determined by gas chromatography, 0.71 g (7.5 mmol) of dimethylchlorosilane was added to and stirred together with the reaction mixture to effect neutralization thereof. After filtration, the filtrate was distilled under reduced pressure to remove therefrom the solvent and the unreacted materials. The resulting polymer will be referred to as "VP-2." As a result of GPC and FTNMR analyses, it was confirmed that VP-2 was an organopolysiloxane represented by the following average formula:

Me₂ViSiO-(Me₂SiO)₉₈-SiMe₂H.

### Example 3

Me₂HexSi(OSiMe₂)₃OH, which will be referred to as "OH-2," was synthesized in substantially the same manner as in the case of OH-1 in Example 1. A solution of a lithium salt of OH-2, OLI-2 (0.28 mol/l), was prepared from OH-2 and n-butyllithium in substantially the same manner as in Example 1.

23.9 ml (6.7 mmol) of OLI-2, 70 g of hexamethylcyclotrisiloxane, 70 g of toluene, and 2.5 g of dimethyl sulfoxide were placed in a four-necked flask equipped with a stirrer and a thermometer, and stirred at 10 °C for 24 hours. Since the extent of reaction was 85 % as determined by gas chromatography, the reaction mixture was neutralized with 0.6 g (10 mmol) of acetic acid. After filtration, the filtrate was distilled under reduced pressure to remove therefrom the solvent and the unreacted materials. The resulting polymer will be referred to as "HP-1." As a result of GPC, FTNMR and iodometry analyses, it was confirmed that HP-1 was an organopolysiloxane represented by the following formula:

Me₂HexSiO-(Me₂SiO)₁₂₆-SiMe₂OH.

50 g (5.22 mmol) of HP-1, 1.26 g (10.4 mmol) of dimethylvinylchlorosilane, 2.22 g (22 mmol) of triethylamine, 50 g of toluene, and 40 g of tetrahydrofuran were placed in a four-necked flask equipped with a stirrer, and subjected to a reaction at room temperature for 24 hours. After filtration, the filtrate was distilled under reduced pressure to remove therefrom the solvent and the unreacted materials to obtain a polymer, which will be referred to as "HP-2." As a result of GPC, FTNMR and iodometry analyses, it was confirmed that HP-2 was an organopolysiloxane represented by the following formula:

Me₂HexSiO-(Me₂SiO)₁₂₇-SiMe₂Vi.

### Example 4

3.5 g (10.8 mmol) of OH-1 prepared in Example 1 was placed in a four-necked flask equipped with a stirrer, in which 1.3 ml (2.1 mmol) of a 1.62 N solution of n-butyllithium in hexane was then placed under an atmosphere of nitrogen. They were mixed together to obtain a mixture comprising partially modified OH-1 having 20 mol % of the total original silanol groups modified with lithium, to which 30 g of hexamethylcyclotrisiloxane, 30 g of toluene, and 0.6 g of dimethyl sulfoxide were then added. The reaction was carried out under an atmosphere of nitrogen at room temperature for 3.5 hours. Since the extent of reaction was 80 % as determined by gas chromatography, 0.15 g (2.5 mmol) of acetic acid was added to and stirred together with the reaction mixture to effect neutralization thereof. After filtration, the filtrate was distilled under reduced pressure to remove therefrom the solvent and the unreacted materials. The resulting polymer will be referred to as "VP-3." As a result of GPC and FTNMR analyses, it was confirmed that VP-3 was an organopolysiloxane represented by the following average formula:

Me₂ViSiO-(Me₂SiO)₃₃-SiMe₂OH.

### [Industrial Applicability]

According to the process of the present invention for preparing an organopolysiloxane, it is possible to easily obtain an organopolysiloxane having an alkenyl group at one molecular chain terminal and an optional group at the other terminal. Organopolysiloxanes prepared by the process can be used as starting materials of silicone rubbers, starting materials of novel graft organopolysiloxanes, and components copolymerizable with resins and plastics other than organopolysiloxanes, and, hence, are very useful in the technical fields of chemistry.

## Claims

1. A process for preparing an alkenyl-terminated organopolysiloxane in which a cyclic trisiloxane is polymerized, in the presence or absence of a molecular weight modifier, and the reaction is thereafter terminated, characterised in that an alkenyl-terminated organopolysiloxane represented by the formula: 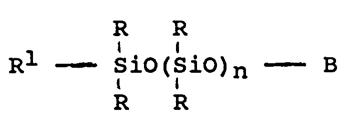 where R¹ is an alkenyl group, the R groups, which may be the same or different, are a monovalent hydrocarbon group or a monovalent halogenated hydrocarbon group, B is hydrogen or a group derived from a terminating agent selected from inorganic acids, organic acids and organochlorosilanes, and n is represented by the formula:
$\text{n ≧ m + 3,}$
where m is an integer of 0, 1 or more,
is obtained by polymerizing a cyclic trisiloxane represented by the formula: 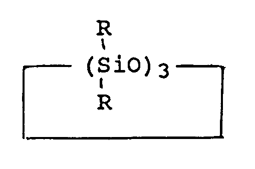 where R is as defined above,
with the aid of a polymerization initiator consisting of one or more alkali metal salts of one or more organosilanes or organopolysiloxanes, represented by the formula: 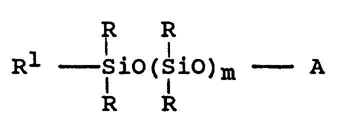 where A is an alkali metal, and R¹, R and m are as defined above,
in the presence or absence of a molecular weight modifier consisting of one or more organosilanes or organopolysiloxanes, represented by the formula: 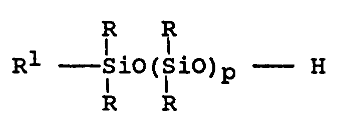 where p, which may be the same as or different from m, is an integer of 0, 1 or more, and R¹, R are as defined above,
the molar ratio of said polymerization initiator to said molecular weight modifier being 100:0 to 0.1:100, and the polymerization reaction being carried out in a dry aprotic solvent under anhydrous conditions with predried reactants, at a temperature of 0 to 30°C for a reaction time of 1-50 hours.

2. A process as claimed in Claim 1, wherein R¹ is an alkenyl group having 2 to 6 carbon atoms.

3. A process as claimed in Claim 1, wherein R is a methyl group.

4. A process as claimed in claim 1, wherein m is 3 to 20.

5. A process as claimed in Claim 1, wherein said alkali metal is lithium.

6. A modification of the process of Claim 1, comprising the additional step of reacting a chlorosilane with the silanol-terminated organopolysiloxane product of the process of Claim 1.

## Patentansprüche

1. Verfahren zur Herstellung von Organopolysiloxanen mit Alkenyl-Endgruppen, bei dem cyclische Trisiloxane in Gegenwart oder Abwesenheit von Molekulargewichtsreglern polymerisiert werden und die Reaktion danach abgebrochen wird, dadurch gekennzeichnet, daß man ein Organopolysiloxan der Formel 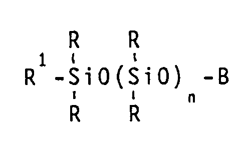 erhält, in der R¹ einen Alkenylrest bedeutet, die Reste R, die gleich oder verschieden sein können, einwertige Kohlenwasserstoffreste oder einwertige halogenierte Kohlenwasserstoffreste bezeichnen, B für Wasserstoff oder den Rest eines Kettenabbruchmittels, ausgewählt aus anorganischen Säuren, organischen Säuren und Organochlorsilanen, steht, und n durch die Gleichung :
$\text{n ≧ m + 3}$
wiedergegeben wird, in der m eine ganze Zahl von 0, 1 oder höher bedeutet,
indem man ein cyclisches Trisiloxan der Formel 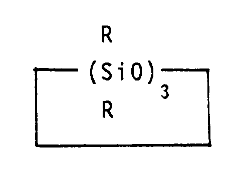 mit Hilfe eines oder mehrerer Alkalisalze eines oder mehrerer Organosilane oder Organopolysiloxane der Formel 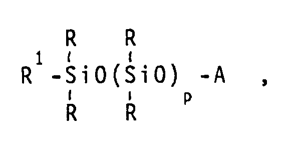 in der A für ein Alkalimetall steht und R¹, R und m die zuvor angegebene Bedeutung haben,
als Polymerisationsinitiator in Gegenwart oder Abwesenheit eines Molekulargewichtsreglers, bestehend aus einem oder mehreren Organosilanen oder Organopolysiloxanen der Formel: 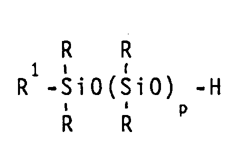 in der das Suffix p, das gleich oder verschiedem von m sein kann, eine ganze Zahl von 0, 1 oder mehr bezeichnet und R¹ und R die zuvor angegeben Bedeutung haben,
polymerisiert, wobei das Molverhältnis des Polymerisationsinitiators zu dem Molekulargewichtsregler von 100:0 bis 0,1:100 beträgt und die Polymerisationsreaktion in einem trockenen aprotischen Lösungsmittel unter wasserfreien Bedingungen mit vorgetrockneten Ausgangsstoffen bei einer Temperatur von 0 bis 30°C und einer Reaktionszeit von 1 bis 50 Stunden durchgeführt wird.

2. Verfahren nach Anspruch 1, wobei R¹ einen Alkenylrest mit 2 bis 6 Kohlenstoffatomen bedeutet.

3. Verfahren nach Anspruch 1, wobei R die Methylgruppe bezeichnet.

4. Verfahren nach Anspruch 1, wobei m von 3 bis 20 beträgt.

5. Verfahren nach Anspruch 1, wobei das Alkalimetall Lithium ist.

6. Abwandlung des Verfahrens nach Anspruch 1, wobei man in einer zusätzlichen Stufe das Organopolysiloxan mit Silanolendgruppe nach Anspruch 1 mit einem Chlorsilan umsetzt.

## Revendications

1. Un procédé de préparation d'un organopolysiloxane à terminaison alkényle, dans lequel un trisiloxane cyclique est polymérisé en la présence ou en l'absence d'un modificateur de masse moléculaire, et la réaction est ensuite terminée, caractérisé par le fait qu'un organopolysiloxane à terminaison alkényle représenté par la formule 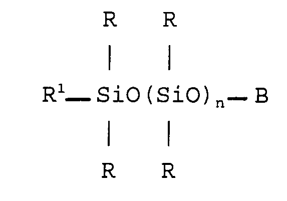 où R¹ est un groupe alkényle, les groupes R, qui peuvent être identiques ou différents, sont un groupe hydrocarboné monovalent ou un groupe hydrocarboné halogéné monovalent, B est l'hydrogène ou un groupe dérivé d'un agent de terminaison choisi parmi les acides inorganiques, les acides organiques et les organochlorosilanes, et n est représenté par la formule
$\text{n ≧ m + 3,}$
où m est un entier égal à 0, 1 ou plus,
est obtenu en polymérisant un trisiloxane cyclique représenté par la formule 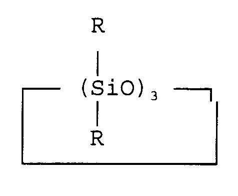 où R est défini comme ci-dessus,
à l'aide d'un agent d'amorçage de polymérisation constitué d'un ou plusieurs sels de métaux alcalins d'un ou plusieurs organosilanes ou organopolysiloxanes, représenté par la formule 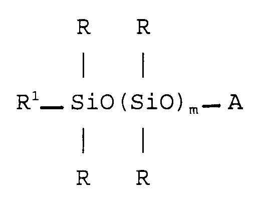 où A est un métal alcalin et R¹, R et m sont comme définis ci-dessus,
en la présence ou en l'absence d'un modificateur de masse moléculaire constitué d'un ou plusieurs organosilanes ou organopolysiloxanes, représenté par la formule 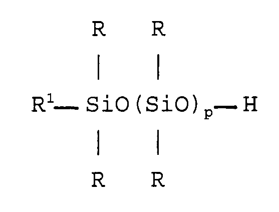 où p, qui peut être identique à m ou différent, est un entier égal à 0, 1 ou plus, et R¹ et R sont comme définis plus haut,
le rapport molaire dudit agent d'amorçage de polymérisation audit modificateur de masse moléculaire étant de 100:0 à 0,1:100 et la réaction de polymérisation étant réalisée dans un solvant aprotique sec, en conditions anhydres, avec des réactifs préséchés, à une température de 0 à 30°C pendant un temps de réaction de 1 à 50 heures.

2. Un procédé selon la revendication 1, dans lequel R¹ est un groupe alkényle possédant 2 à 6 atomes de carbone.

3. Un procédé selon la revendication 1, dans lequel R est un groupe méthyle.

4. Un procédé selon la revendication 1, dans lequel m a une valeur de 3 à 20.

5. Un procédé selon la revendication 1, dans lequel ledit métal alcalin est le lithium.

6. Une variante du procédé de la revendication 1, comportant l'étape supplémentaire qui consiste à faire réagir un chlorosilane avec le produit organopolysiloxane à terminaison silanol du procédé de la revendication 1.
